# EUROPEAN PATENT SPECIFICATION

(11) **EP 2 717 412 B1**
(45) Date of publication and mention of the grant of the patent: **12.07.2017**
(21) Application number: 12793000.6
(22) Date of filing: 28.05.2012
(51) Int. Cl.: H02J 3/38, H02J 7/35, H02J 9/06

(54) **POWER SUPPLY SYSTEM**
STROMVERSORGUNGSSYSTEM
SYSTÈME D'ALIMENTATION ÉLECTRIQUE

(30) Priority: 31.05.2011 JP 2011122472
(43) Date of publication of application: 09.04.2014
(73) Proprietor: Panasonic Intellectual Property Management Co., Ltd., Osaka-shi, Osaka 540-6207 (JP)
(72) Inventor: INAKAGATA, Satoru, Osaka 540-6207 (JP); KOSHIN, Hiroaki, Osaka 540-6207 (JP); TAMURA, Hideki, Osaka 540-6207 (JP); NISHI, Mariko, Osaka 540-6207 (JP); NAKAMOTO, Atsushi, Osaka 540-6207 (JP); KAWAKATSU, Masaharu, Osaka 540-6207 (JP); KATO, Ichiro, Osaka 540-6207 (JP); MURAYAMA, Kei, Osaka 540-6207 (JP)
(74) Representative: Appelt, Christian W.
(86) International application number: PCT/JP2012/063593
(87) International publication number: WO 2012/165365

(56) References cited:
- WO-A1-2009/015331
- DE-A1- 10 221 592
- DE-A1-102007 030 451
- DE-A1-102009 040 090
- DE-U1-202010 008 123
- JP-A- 9 051 638
- JP-A- 10 023 671
- JP-A- 2000 287 382
- JP-A- 2006 149 037
- US-A1- 2009 295 227
- US-A1- 2011 115 292

## Description

### TECHNICAL FIELD

The invention relates to a power supply system.

### BACKGROUND ART

Conventionally, there is a power supply system configured to supply appliances with power from a commercial power supply, photovoltaic power generation and a secondary battery, while combining power generated by the photovoltaic power generator with the commercial power supply and also storing the power in the secondary battery (e.g., Japanese Patent Application Publication No. 2011-15501).

Generally, a power conditioner is configured to convert DC power generated by a solar cell into AC power, and is further configured to be capable of switching between grid-connected operation in which power is supplied by cooperating with the commercial power supply, and grid independent operation in which power is supplied without cooperating with the commercial power supply. In a case where the power conditioner performs the grid independent operation, power from an output for grid-connected operation connected to the commercial power supply is blocked, and therefore, the power conditioner outputs AC power only from an output for the grid independent operation (a grid independent outlet).

However, conventionally, there has not been a system which can store power generated by the photovoltaic power generator and utilize the stored power, using the output for the grid independent operation in the power conditioner.

Accordingly, a power supply system with a distributed power source, such as a photovoltaic power generator, that has been recently spreading, cannot store power through the output for the grid independent operation, in an emergency in which it is difficult to supply power from the commercial power supply, namely for example when a power failure has occurred, when an earthquake has occurred, or the like. Therefore, it is desired that power supply capability be improved in the emergency in which it is difficult to supply power from the commercial power supply.
Document DE 10 2007 030 451 A1 discloses an electrical power supply apparatus having a first and second electrical power supply connections. The first electrical power supply connection is connected to a main power supply network, and the second electrical power supply connection is connected to a photovoltaic system. In the main power system failure, the photovoltaic system provides the supply to electrical loads from the solar panel and/or batteries.
Document DE 10 2009 040 090 A1 discloses a power control device comprising a power generation unit, an energy storage unit, a load connection unit and a grid unit. In case power generated in the power generation unit does not meet the demand of loads, power is supplied to the loads also by the grid. In case power generated in the power generation unit is in excess, the energy storage unit is charged.

### DISCLOSURE OF THE INVENTION

It is an object of the present invention to provide a power supply system, which can store power through an output for a grid independent operation in a power conditioner, and further can improve power supply capability in an emergency in which it is difficult to supply power from a commercial power supply.

Aspects of the invention are disclosed in independent claim 1, namely a power supply system including a power conditioner configured to convert DC power supplied by a distributed power source into AC power and output the AC power; a storage cell unit configured to store electrical energy; and a charge-discharge unit configured to charge the storage cell unit. The charge-discharge unit is configured to convert the charged power in the storage cell unit into AC power and output the AC power. The power conditioner is configured to perform grid-connected operation during a normal state in which AC power is supplied by a commercial power supply, and is configured to perform grid independent operation during a power failure state in which the supply of the AC power by the commercial power supply is stopped. The charge-discharge unit is configured to charge the storage cell unit with the AC power supplied by the power conditioner in the grid independent operation, or supply, to an appliance, the AC power supplied by the power conditioner in the grid independent operation.

The invention makes it possible to store power through an output for the grid independent operation in the power conditioner, and improve the power supply capability in an emergency in which it is difficult to supply power from the commercial power supply.

In the invention, preferably, one of the power conditioner and the charge-discharge unit is configured to notify the other of the supply state of the AC power by the commercial power supply.

In the invention, preferably, the power supply system is further configured: to operate, when the distributed power source outputs DC power during the power failure state, in a first supply mode in which the power conditioner supplies AC power to the appliance and the charge-discharge unit; and to operate, when the distributed power source does not output DC power during the power failure state, in a second supply mode in which the charge-discharge unit converts the charged power in the storage cell unit into AC power and supplies the AC power to the appliance.

In the invention, preferably, the power supply system further includes an operation unit configured to switch between the grid-connected operation and the grid independent operation in the power conditioner during the power failure state by user operation, and is configured to switch between the first and second supply modes according to the output state of the DC power outputted by the distributed power-source, when the power conditioner performs the grid independent operation through operation to the operation unit.

In the invention, preferably, the power conditioner is configured to start the grid independent operation, based on a supply schedule for the AC power by the commercial power supply, before the normal state is changed to the power failure state.

In the invention, preferably, the power supply system further includes a notifying unit configured to notify of information relevant to a period during which the power conditioner performs the grid independent operation based on a supply schedule for the AC power by the commercial power supply.

In the invention, preferably, the power conditioner is configured: to perform, when no earthquake occurs, the grid-connected operation; and to perform, when an earthquake has occurred, the grid independent operation.

In the invention, preferably, the charge-discharge unit includes an output part configured to supply, when the power conditioner performs the grid independent operation, AC power to the appliance.

In the invention, preferably, the power supply system further includes a switching unit configured to switch the connection destination of the appliance to the output part or a main electric path.

In the invention, preferably, the switching unit is configured to switch, when the power conditioner performs the grid independent operation, the connection destination of the appliance to the output part.

In the invention, preferably, the switching unit is configured to switch, by user operation, the connection destination of the appliance to the output part.

In the invention, preferably, the power supply system further includes an abnormality detection unit configured to detect abnormality in an electric path from the output part to the appliance, when the output part supplies AC power upon the grid independent operation of the power conditioner, and the charge-discharge unit is configured to stop, when the abnormality detection unit has detected the abnormality, the supply of the AC power by the output part.

In the invention, preferably, the charge-discharge unit includes a grid independent output setting part configured to set whether or not the output part supplies AC power to the appliance, when the power conditioner performs the grid independent operation.

In the invention, preferably, the power supply system further includes a plurality of sets, each of which is configured by the charge- discharge unit and the storage cell unit.

In the invention, preferably, the power conditioner is configured to distribute AC power supplied to charge-discharge units of the plurality of sets, based on operation patterns for appliances to which the charge-discharge units respectively supply AC power.

In the invention, preferably, the charge-discharge unit is configured to operate, when the power conditioner performs the grid independent operation, in one operation mode selected from among: a first operation mode of charging the storage cell unit with AC power supplied by the power conditioner; a second operation mode of supplying, to the appliance, AC power converted from the charged power in the storage cell unit; and a third operation mode of converting the charged power in the storage cell unit into AC power and then supplying the AC power to the appliance, while charging the storage cell unit with AC power supplied by the power conditioner.

In the invention, preferably, the charge-discharge unit is configured to operate, when the power conditioner performs the grid independent operation, in one operation mode selected from among: a first operation mode of charging the storage cell unit with AC power supplied by the power conditioner; a second operation mode of supplying, to the appliance, AC power converted from the charged power in the storage cell unit; and a fourth operation mode of supplying, to the appliance, AC power supplied by the power conditioner.

In the invention, preferably, when the power conditioner performs the grid independent operation, the charge-discharge unit is configured: to convert the charged power in the storage cell unit into AC power and then supply the AC power to the appliance; and to supply AC power supplied by the output part to the appliance, after the remaining capacity in the storage cell unit reduces to a predetermined value or less.

In the invention, preferably, when the power conditioner performs the grid independent operation, the charge-discharge unit is configured: to charge the storage cell unit with DC power supplied by the distributed power source; or to convert DC power supplied by the distributed power source into AC power, and then supply the AC power to the appliance.

### BRIEF DESCRIPTION OF THE DRAWINGS

Preferred embodiments of the invention will now be described in further details. Other features and advantages of the present invention will become better understood with regard to the following detailed description and accompanying drawings where:
Fig. 1 is a block diagram illustrating a configuration of a power supply system according to First Embodiment;
Fig. 2 is a circuit diagram illustrating a configuration of a charge- discharge unit according to the First Embodiment;
Fig. 3 is a block diagram illustrating a configuration of a power supply system according to Second Embodiment;
Fig. 4 is a block diagram illustrating a schematic configuration of a power supply system according to Third Embodiment;
Fig. 5A is a block diagram illustrating an operation mode during a normal state according to the Third Embodiment;
Fig. 5B is a block diagram illustrating an operation mode during the normal state according to the Third Embodiment;
Fig. 5C is a block diagram illustrating an operation mode during the normal state according to the Third Embodiment;
Fig. 6A is a block diagram illustrating a second operation mode during a power failure state according to the Third Embodiment;
Fig. 6B is a block diagram illustrating a fourth operation mode during the power failure state according to the Third Embodiment;
Fig. 6C is a block diagram illustrating a first operation mode during the power failure state according to the Third Embodiment;
Fig. 7 is a block diagram illustrating a schematic configuration of a power supply system according to Fifth Embodiment;
Fig. 8 is a block diagram illustrating a supply mode during a normal state according to the Fifth Embodiment;
Fig. 9 is a block diagram illustrating a first supply mode during a power failure state according to the Fifth Embodiment; and
Fig. 10 is a block diagram illustrating a second supply mode during the power failure state according to the Fifth Embodiment.

### BEST MODE FOR CARRYING OUT THE INVENTION

Hereinafter, embodiments of the invention will be explained based on Figures.

### (First Embodiment)

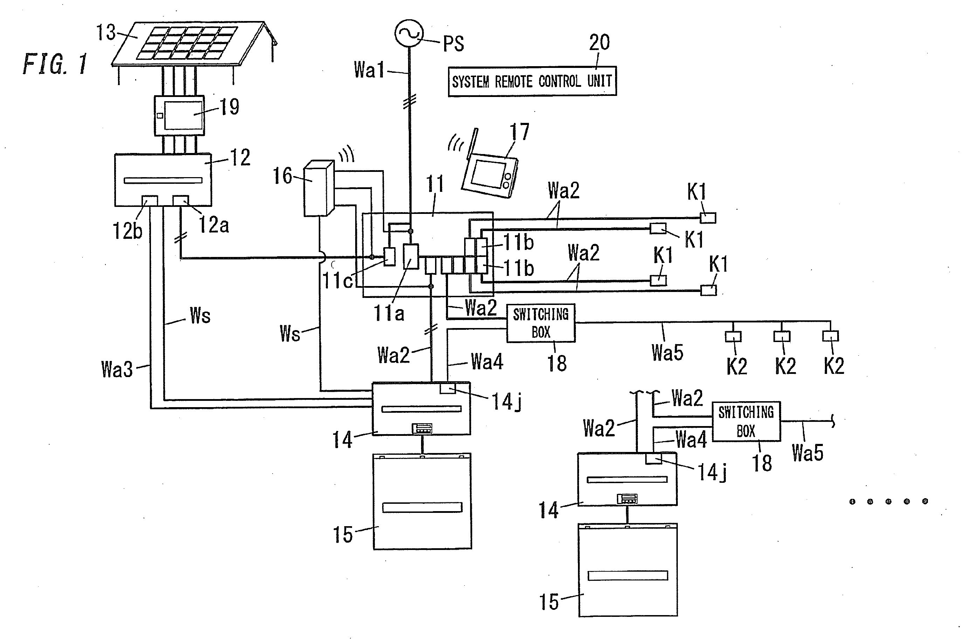

A power supply system according to the present embodiment includes components shown in Fig. 1, and is used in each of consumer houses to which power is supplied by an electric power company. The system includes a grid-connected board **11**, a power conditioner **12**, a solar cell **13**, a charge-discharge unit **14**, a storage cell unit **15**, a power measurement unit **16**, an information monitoring terminal **17**, a switching box **18,** a junction box **19** and a system remote control unit **20**, as main components.

The grid-connected board **11** is connected to a main electric line **Wa1** of a 200V/100V, 3-wire single phase distribution system that is drawn into each of consumer houses such as individual houses in collective housing, single-family houses, factories, and offices. Commercial power is supplied, via the main electric line **Wa1**, from a commercial power supply **PS** of the electric power company to the grid-connected board. In the grid-connected board **11**, a main power supply breaker **11a**, branch breakers **11b**, a breaker **11c** for photovoltaic power generation are housed. The main electric line **Wa1** is connected to the branch breakers **11b** via the main power supply breaker **11a**, and is branched into branch electric lines **Wa2** via the branch breakers **11b**. The branch electric lines **Wa2** are respectively connected to appliances **K1** such as a lighting appliance, an air-conditioning appliance and a home appliance, and supply AC power to those appliances **K1**. The main electric line **Wa1** and the branch electric lines **Wa2** are equivalent to a main electric path in the invention.

The system includes a photovoltaic power generator configured by the power conditioner **12** and the solar cell **13.** DC power generated from sunlight by solar cell **13** is supplied to the power conditioner **12** via the junction box **19** and is converted into AC power by the power conditioner **12.** The power conditioner **12** is connected to the primary side of the main power supply breaker **11a** via the breaker **11c** for photovoltaic power generation in the grid-connected board **11**, and has a function of grid-connected operation to cause the AC output to cooperate with commercial power supplied by the commercial power supply **PS.** AC power outputted by the power conditioner **12** is supplied to the branch electric lines **Wa2** via the breaker **11c** for photovoltaic power generation, the main power supply breaker **11a** and the branch breakers **11b**. Then the AC power is supplied to the appliances **K1** and **K2** via the branch electric lines **Wa2**. Excess power that has not been consumed among AC power outputted by the power conditioner **12** reversely flows into the commercial power supply **PS** via the main electric line **Wa1** (electric power is sold).

The system further includes a power storage device configured by the charge-discharge unit **14** and the storage cell unit **15.** The storage cell unit **15** is formed of a secondary cell such as a lithium ion cell, and is controlled in charging and discharging by the charge-discharge unit **14.**

The charge-discharge unit **14** is connected to a branch breaker **11b** in the grid-connected board **11** via a branch electric line **Wa2**, and is configured to convert AC power supplied via the grid-connected board **11** into DC power and charge the storage cell unit **15.** In addition, the charge-discharge unit **14** is configured to convert DC power stored in the storage cell unit **15** into AC power, and supply the AC power to appliances **K2** as described below via an AC electric line **Wa4**. That is, the charge-discharge unit **14** is configured as a bidirectional power converter that has both of an AC/DC conversion function and a DC/AC conversion function. Further, the charge-discharge unit **14** has a function of grid-connected operation to cause the AC output to cooperate with commercial power supplied by the commercial power supply **PS.**

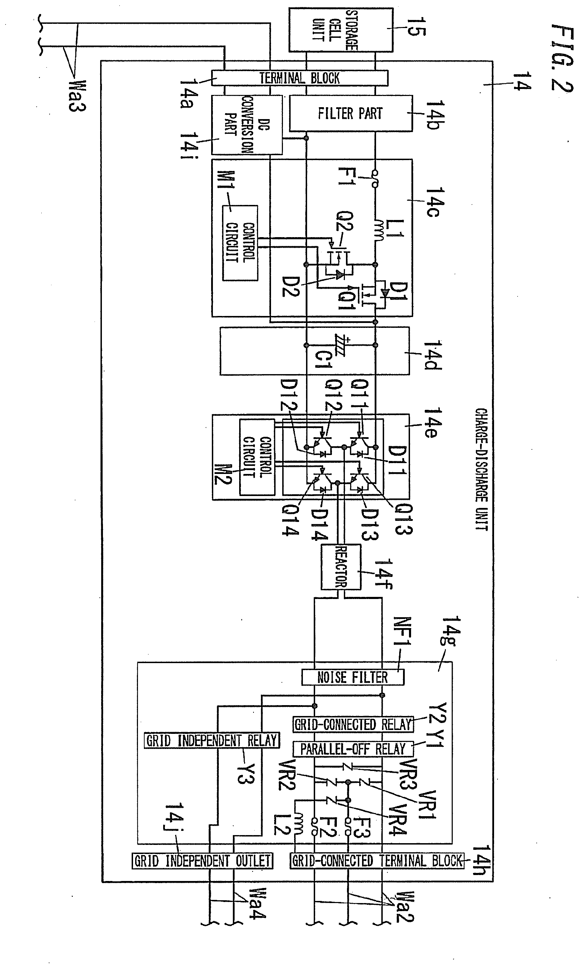

Fig. 2 shows a circuit configuration of the charge-discharge unit **14** that includes a terminal block **14a**, a filter part 1**4b**, a step-up/down part **14c**, a capacitor block **14d**, an orthogonal conversion part **14e**, a reactor **14f**, a grid-connected part **14g**, a grid-connected terminal block **14h**, a DC conversion part **14i** and a grid independent outlet **14j.**

The storage cell unit **15** is connected to the terminal block **14a**, and thereby is electrically connected to the step-up/down part **14c** via the filter part **14b.** The terminal block **14a** has a heating protection function, as a temperature fuse or the like. The filter part **14b** has a function as a noise filter for a normal mode noise and a common mode noise.

In the step-up/down part **14c**, a series circuit of a fuse **F1**, an inductor **L1** and a switching element **Q1** is connected to an anode side of the storage cell unit **15**, and further a switching element **Q2** is connected between one ends of the filter part **14b** via the fuse **F1** and inductor **L1.** The switching elements **Q1** and **Q2** are respectively connected to diodes **D1** and **D2** in reverse-parallel.

In the step-up/down part, a control circuit **M1** keeps ON-state of the switching element **Q1** and performs ON/OFF control of the switching element **Q2**, and accordingly, the step-up/down part **14c** operates as a step-up chopper circuit. That is, DC power outputted by the storage cell unit **15** is boosted and is outputted to the capacitor block **14d.** The capacitor block **14d** includes one or more smoothing capacitors **C1** and smooths an output voltage of the step-up/down part **14c**.

On the other hand, the control circuit **M1** performs ON/OFF control of the switching element **Q1** and keeps OFF-state of the switching element **Q2**, and accordingly, the step-up/down part **14c** operates as a step-down chopper circuit. That is, a voltage across the smoothing capacitor **C1** is stepped down and is outputted to the storage cell unit **15** via the filter part **14b** and terminal block **14a**, and the storage cell unit **15** is charged.

In the orthogonal conversion part **14e**, a parallel circuit is configured by: switching elements **Q11** and **Q12** connected in series; and switching elements **Q13** and **Q14** connected in series. The parallel circuit is connected between both ends of the smoothing capacitor **C1.** The switching elements **Q11** to **Q14** are respectively connected to diodes **D11** to **D14** in reverse- parallel. A connection midpoint of the switching elements **Q11** and **Q12** and a connection midpoint of the switching elements **Q13** and **Q14** are connected to the grid-connected part **14g** via the reactor **14f.**

In the orthogonal conversion part, a control circuit **M2** performs alternately ON/OFF drive of the switching elements **Q11** and **Q14**, and the switching elements **Q12** and **Q13**, and accordingly the orthogonal conversion part **14e** operates as a DC/AC inverter having an output at the side of the reactor **14f.** In this case, the orthogonal conversion part **14e** converts DC voltage of the smoothing capacitor **C1** into AC voltage, and outputs the AC voltage.

In addition, the control circuit **M2** keeps OFF-states of the switching elements **Q11** to **Q14**, and accordingly, the orthogonal conversion part **14e** operates as a rectifying circuit having an output at the side of the capacitor block **14d.** In this case, the orthogonal conversion part **14e** converts, into DC voltage, AC voltage supplied from a branch electric line **Wa2** via the grid-connected part **14g** and reactor **14f**, and outputs the DC voltage.

The grid-connected terminal block **14h** is connected to the branch electric line **Wa2** that is connected to a branch breaker **11b.** The branch electric line **Wa2** is connected to the grid-connected part **14g** via the grid- connected terminal block **14h.** The branch electric line **Wa2** is configured as a type of a 200V, 3-wire single phase distribution system. That is, a pair of voltage wires and a single neutral wire are connected to the grid-connected terminal block **14h.** The grid-connected terminal block **14h** has a heating.protection function, as a temperature fuse or the like.

In the grid-connected part **14g**, voltage protection elements **VR1** to **VR3** such as varistors are connected between the wires. Fuses **F2** and **F3** are respectively inserted in one voltage wire and the neutral wire. The neutral wire is grounded via the voltage protection element **VR4** and inductor **L2**.

The grid-connected part **14g** includes a parallel-off relay **Y1**, a grid-connected relay **Y2**, a grid independent relay **Y3** and a noise filter **NF1**. The pair of voltage wires from the grid-connected terminal block **14h** is connected to one end of the reactor **14f** via the parallel-off relay **Y1**, grid-connected relay **Y2** and noise filter **NF1** connected in series. The other end of the reactor **14f** is connected to the connection midpoint of the switching elements **Q11** and **Q12** and the connection midpoint of the switching elements **Q13** and **Q14** in the orthogonal conversion part **14e.**

The grid independent relay **Y3** is connected to the grid-connected relay **Y2** in parallel. The noise filter **NF1**, grid independent relay **Y3**, and grid independent outlet **14j** are connected in series.

The noise filter **NF1** has a function as a noise filter for a normal mode noise and a common mode noise.

In the charge-discharge unit **14** with the above configuration, the orthogonal conversion part **14e** operates as a rectifying circuit, and the step-up/down part **14c** operates as a step-down chopper, and accordingly, the charge-discharge unit **14** converts, into DC power, AC power supplied from the branch electric line **Wa2** via the grid-connected terminal block **14h**, and then charges the storage cell unit **15.** In the charge-discharge unit **14**, the step-up/down part **14c** operates as a step-up chopper, and the orthogonal conversion part **14e** operates as a DC/AC inverter, and accordingly, the charge-discharge unit **14** converts, into AC power, DC power outputted from the storage cell unit **15.**

The power measurement unit **16** measures electric power at three points in the present system. As a first point, the power measurement unit **16** measures AC power supplied, via the main power supply breaker **11a**, by the commercial power supply **PS** and the power conditioner **12.** As a second point, the power measurement unit **16** measures AC power outputted from the power conditioner **12.** As a third point, the power measurement unit **16** measures power to be charged into the storage cell unit **15**, supplied to the charge-discharge unit **14** via the branch electric line **Wa2**. The power measurement unit **16** transmits power measurement data at each of the above points, into the information monitoring terminal **17**, with a radio signal. The information monitoring terminal **17** then displays the power measurement result that has been measured at each of the above points.

Further, based on the power measurement data at each of the above points, the power measurement unit **16** determines whether the present state is a normal state where the commercial power supply **PS** keeps supplying the commercial power, or a power failure state where the supply of the commercial power by the commercial power supply **PS** is stopped. Then, power measurement unit **16** transmits, into the charge-discharge unit **14**, this determined result (power failure determination information) via a signal line **Ws.** The charge-discharge unit **14** can determine the normal state or the power failure state, based on the received power failure determination information. Further, the charge-discharge unit **14** transmits the power failure determination information into the power conditioner **12** via the signal line **Ws.** The power conditioner **12** determines the normal state or power failure state, and accordingly can switch between the grid-connected operation and the grid independent operation.

Firstly, each operation during the normal state where the commercial power supply **PS** keeps supplying the commercial power will be explained.

The power conditioner **12** turns on (conduction) a grid-connected relay (not shown) during the normal state, and supplies AC power generated from the generated power by the solar cell **13** from a grid-connected output part **12a** to the branch electric lines **Wa2** via the breaker **11c** for photovoltaic power generation, the main power supply breaker **11a** and the branch breakers **11b**. That is, the power conditioner **12**, during the normal state, supplies AC power via the grid-connected board **11.** In this case, the AC power generated from the generated power by the solar cell **13** is not being supplied to a grid independent outlet **12b** (see Fig. 1) that is installed at the power conditioner **12.** The grid-connected output part **12a** is an output used for the grid-connected operation, and the grid independent outlet **12b** is an output used for the grid independent operation.

The charge-discharge unit **14**, during the normal state, turns on (conduction) the parallel-off relay **Y1** and the grid-connected relay **Y2**, and turns off (interruption) the grid independent relay **Y3**, and converts, into DC power, AC power supplied from the branch electric line **Wa2**, and charges the storage cell unit **15.**

That is, during the normal state, the operating power for the appliances **K1** and the power to be charged into the storage cell unit **15** are supplied, via the grid-connected board **11**, by the commercial.power supply **PS** and the power conditioner **12.** Among AC power outputted from the power conditioner **12**, the excess power that has not been consumed as the operating power for the appliances **K1** and the power to be charged into the storage cell unit **15** reversely flows into the commercial power supply **PS** via the main electric line **Wa1** (electric power is sold). Thus, the power conditioner **12**, during the normal state, performs the grid-connected operation.

During the normal state, the specific branch electric line **Wa2** is connected to an AC electric line **Wa5** via the switching box **18**. The switching box **18** includes a switching means that is configured to switch the connection destination of the AC electric line **Wa5** to the branch electric line **Wa2** or an AC electric line **Wa4** described below. During the normal state, the connection destination of the AC electric line **Wa5** is switched to the branch electric line **Wa2**. Therefore, during the normal state, the operating power for the appliances **K2** connected to the AC electric line **Wa5** is supplied by the commercial power supply **PS** and the power conditioner **12.**

Next, each operation during the power failure state where the supply of the commercial power by the commercial power supply **PS** is stopped will be explained.

During the power failure state, the power conditioner **12** turns off (interruption) the grid-connected relay (not shown), and accordingly, AC power generated from the generated power by the solar cell **13** is not outputted to the side of the grid-connected board **11.** That is, the operating power is not supplied to the appliances **K1**. Also, the power to be charged into the storage cell unit **15** is not supplied, via the grid-connected board **11**, by the commercial power supply **PS** and the power conditioner **12.**

Meanwhile, the power conditioner **12**, during the power failure state, supplies, to the grid independent outlet **12b** installed thereat (see Fig. 1), AC power generated from the generated power by the solar cell **13.** That is, the power conditioner **12**, during the power failure state, performs the grid independent operation. Here, the system may have a configuration where the operation is automatically switched to the grid independent operation when the power failure occurs or a configuration where the operation is switched to the grid independent operation by user manual operation during the power failure state.

During the power failure state, the charge-discharge unit **14** turns off the parallel-off relay **Y1** and the grid-connected relay **Y2**, and turns on the grid independent relay **Y3.** Further, the charge-discharge unit **14** converts, into AC power, DC power stored in the storage cell unit **15**, and supplies the AC power to the grid independent outlet **14j** via the grid independent relay **Y3.** The grid independent outlet **14j** is equivalent to an output part in the invention.

The grid independent outlet **14j** is connected to the switching box **18** via the AC electric line **Wa4**. The switching box **18**, when the power failure occurs, switches the connection destination of the AC electric line **Wa5** to the AC electric line **Wa4**. Therefore, during the power failure state, the operating power for the appliances **K2** connected to the AC electric line **Wa5** is supplied via the charge-discharge unit **14** by the storage cell unit **15.** Here, the appliances **K2** are appliances of which activation is desired even during the power failure state. Examples of the appliances **K2** include a lighting appliance, an air-conditioning appliance, a refrigerator and the like. The switching box **18** is equivalent to a switching unit in the invention.

The grid independent outlet **12b** of the power conditioner **12** is connected to the terminal block **14a** of the charge-discharge unit **14**, and supplies, to the DC conversion part **14i**, AC power generated from the generated power by the solar cell **13.** The DC conversion part **14i** converts, into DC power, AC power supplied through the grid independent outlet **12b**, and outputs the DC power to both ends of the smoothing capacitor **C1**. In the charge-discharge unit **14**, DC power outputted by the DC conversion part **14i** is converted into the power to be charged into the storage cell unit **15**, or AC power to be supplied to the appliances **K2** via the grid independent outlet **14j.** The output of the DC conversion part **14i** may be connected between the filter part **14b** and step-up/down part **14c**. Further, the AC power supplied through the grid independent outlet **12b** may be directly supplied between the noise filter **NF1** and grid independent relay **Y3** instead of the installation of the DC conversion part **14i.**

In the power supply system as described above, the commercial power supply **PS** and the power conditioner **12**, during the normal state, supply the power to be charged into the storage cell unit **15** via the grid-connected board **11.** However, when the commercial power supply **PS** is in the power failure, AC output of the power conditioner **12** is not outputted to the grid-connected board **11.** In order to resolve this problem, as described above, the power to be charged into the storage cell unit **15** is supplied through the grid independent outlet **12b** of the power conditioner **12** during the power failure state of the commercial power supply **PS**, and accordingly, even during the power failure state, the storage cell unit **15** can be charged by the photovoltaic power generation. Therefore, it is possible to store power through the grid independent outlet **12b** of the power conditioner **12**, and to improve the power supply capability in the power failure state.

Here, the power supplied by the power conditioner **12** depends on the amount of the power generated by the solar cell **13**, and therefore, it is impossible to ensure stable power supply. In order to resolve this problem, the power conditioner **12** is configured to transmit, into the charge-discharge unit **14**, information relevant to the amount of the power generated by the solar cell **13.** The charge-discharge unit **14**, during the power failure state, is configured to select any one of the following three operation modes, based on the amount of the power by the solar cell **13**, and to operate in the selected operation mode. A first operation mode is a mode of charging the storage cell unit **15** with AC power supplied through the grid independent outlet **12b**. A second operation mode is a mode of converting, into AC power, the charged power in the storage cell unit **15** and then supplying the AC power to the appliances **K2.** A third operation mode is a mode of converting the charged power in the storage cell unit **15** into AC power and then supplying the AC power to the appliances **K2**, while charging the storage cell unit **15** with AC power supplied through the grid independent outlet **12b.** Then, based on the amount of the power generated by the solar cell **13**, the operation mode of the charge-discharge unit **14** is switched, and thereby, it is possible to stabilize the power supply in the power failure state.

The charge-discharge unit **14**, during the power failure state, may be configured to select any one of the following three operation modes instead of the above three operation modes, and to operate in the selected operation mode. Specifically, the three operation modes are: the above first operation mode; the above second operation mode; and a fourth operation mode of directly supplying, to the appliances **K2**, AC power supplied by the power conditioner **12** without charging.

The charge-discharge unit **14** includes the grid independent outlet **14j** used for supplying AC power to the appliances **K2** of which activation is desired even during the power failure state. Therefore, during the power failure state, it is possible to supply the operating power to the appliances **K2** without via the grid-connected board **11.** The grid independent outlet **14j** may have a configuration of an outlet to which pins of a plug are connected or a configuration of a terminal block to which a terminal is connected.

By switching of the switching box **18**, power to be supplied to the appliances **K2** is supplied via the grid-connected board **11** during the normal state, and via the grid independent outlet **14j** of the charge-discharge unit **14** during the power failure state, and accordingly, it is possible to continuously supply the operating power to the appliances **K2.** The switching operation of the switching box **18** may be achieved by a confirmation with an automatic switching means (not shown) configured to perform automatic switching when the power failure occurs, or a configuration with a manual operation means (not shown) configured to perform switching by user manual operation. The automatic switching means is formed of a relay and the like for example.

The AC electric line **Wa5** connected to the switching box **18** is a dedicated line for the appliances **K2** of which the activation is desired even during the power failure state. In the grid independent outlet **14j** of the charge-discharge unit **14**, the upper limit of the output capacitance is set depending on the capacitance of the storage cell unit or the like. That is, for one or more appliances **K2** capable of being connected to a single-system AC electric line **Wa5**, a condition is required: where the total of the power used in the appliances **K2** is smaller than the output capacitance in the grid independent outlet **14j.**

For this reason, as shown in Fig. 1, the power supply system includes a plurality of sets, each of which is a pair of a charge-discharge unit **14** and a storage cell unit **15**, and is provided with multi-system AC electric lines **Wa5**. A dedicated system AC electric line is assigned for each of types of the appliances **K2.** That is, the multi-system AC electric lines **Wa5** are assigned as a dedicated system for air-conditioning appliances, a dedicated system for refrigerators and a dedicated system for lighting appliances for example. Therefore, even when the upper limit of the output capacitance is set for the grid independent outlet **14j**, it is possible to activate many appliances **2** even during the power failure state.

During the power failure state, the power supply system distributes, to charge-discharge units **14**, AC power supplied through the grid independent outlet **12b** of the power conditioner **12**, and thereby individually charging storage cell units **15** respectively connected to the charge-discharge units **14.** Here, the power supply system is configured so as to learn an operational pattern for appliances **K2** connected to each of the AC electric lines **Wa5**, or the operational pattern is previously set. In the power failure state, the power supply system calculates a time possible to supply power to appliances **K2** for each AC electric line **Wa5**, based on the remaining capacities in the storage cell units **15** respectively connected to the charge-discharge units **14**, and the operational pattern for appliances **K2.** Based on this calculated result, the power supply system determines the distribution ratio of AC output of the power conditioner **12**, and charges a storage cell unit **15** for each AC electric line **Wa5**. Therefore, during the power failure state, it is possible to efficiently distribute AC power supplied through the grid independent outlet **12b** of the power conditioner **12** to the multi-system AC electric lines **Wa5,** based on the remaining capacities in the storage cell units **15** and the operational pattern for appliances **K2.**

A determination means for determining this distribution ratio is provided in the system remote control unit **20** that has a function of monitoring and controlling each device and appliance by performing wire communication or wireless communication with the device or appliance in the system. The system remote control unit **20** is configured to determine the distribution ratio of AC output of the power conditioner **12**, and to control the power conditioner **12** to distribute AC power supplied through the grid independent outlet **12b** to the charge-discharge units **14**, based on the distribution ratio.

Each of the charge-discharge units **14** may, based on the remaining capacity in the storage cell unit **15** connected thereto, adjust power supplied through the grid independent outlet **14j**, during the power failure state. For example, each of the charge-discharge units adjusts the power supplied through the grid independent outlet **14j** so as to be capable of supplying power to appliances **K2** with the present remaining capacity in the storage cell unit **15** till operation for charging the storage cell unit **15** by the power conditioner **12** is started next.

The charge-discharge unit **14** may include a grid independent output setting part (not shown) that is configured to set whether or not switching the grid independent relay **Y3** from OFF to ON is performed when the power failure occurs. In the case of being set to be capable of switching, the charge-discharge unit **14** switches the grid independent relay **Y3** from OFF to ON when the power failure occurs, and supplies the operating power for the appliances **K2** through the grid independent outlet **14j.** In the case of being set not to be capable of switching, the charge-discharge unit **14** keeps OFF-state of the grid independent relay **Y3** during the power failure state, and does not supply the operating power for the appliances **K2** through the grid independent outlet **14j.**

Also, the power measurement unit **16** and information monitoring terminal **17** are considered as one of the appliances **K2**, and the operating power therefor is supplied through the AC electric line **Wa5**. Therefore, the information monitoring terminal **17** displays the occurrence of the power failure, based on the power failure determination information received from the power measurement unit **16**, and informs the user of the occurrence of the power failure.

The charge-discharge unit **14** may include an abnormality detection unit configured to detect short-circuit or electric leakage in an output electric path consisting of the AC electric lines **Wa4** and **Wa5**, the switching box **18** and the appliances **K2**, when supplying AC power to the appliances **K2** through the grid independent outlet **14j** during the power failure state. For example, after the switching box **18** switches the connection destination of the AC electric line **Wa5** to the AC electric line **Wa4**, the charge-discharge unit **14** outputs AC power having low-current through the grid independent outlet **14j** by limiting AC output, and measures an output voltage at that time. Then, if the measured output voltage is equal to or more than a predetermined voltage, the charge-discharge unit **14** determines that abnormality as short-circuit or electric leakage has not occurred in the output electric path, and then releases the output limit. If the measured output voltage is less than the predetermined voltage, the charge-discharge unit **14** determines that abnormality as short-circuit or electric leakage has occurred in the output electric path, and then stops the output.

In the case where the charge-discharge unit **14** is configured to detect the above-mentioned abnormality as short-circuit or electric leakage, the appliances **K2** may be configured to automatically shift to a standby state that is a state of low power consumption, compared with a state of a normal operation. For example, the charge-discharge unit **14** notifies the system remote control unit **20** of detecting the abnormality as short-circuit or electric leakage by wire communication or wireless communication (see Fig. 1). The system remote control unit **20** makes the appliances **K2** shift to the standby state by wire communication or wireless communication. Therefore, it is possible to effectively operate detection of the abnormality as short-circuit or electric leakage by the charge-discharge unit **14.** Here, the system remote control unit **20** is also one of the appliances **K2** and the operating power therefor is supplied through the AC electric line **Wa5**. In addition, the system remote control unit **20** has a function of remotely controlling the appliances **K1** and **K2** during the normal state.

### (Second Embodiment)

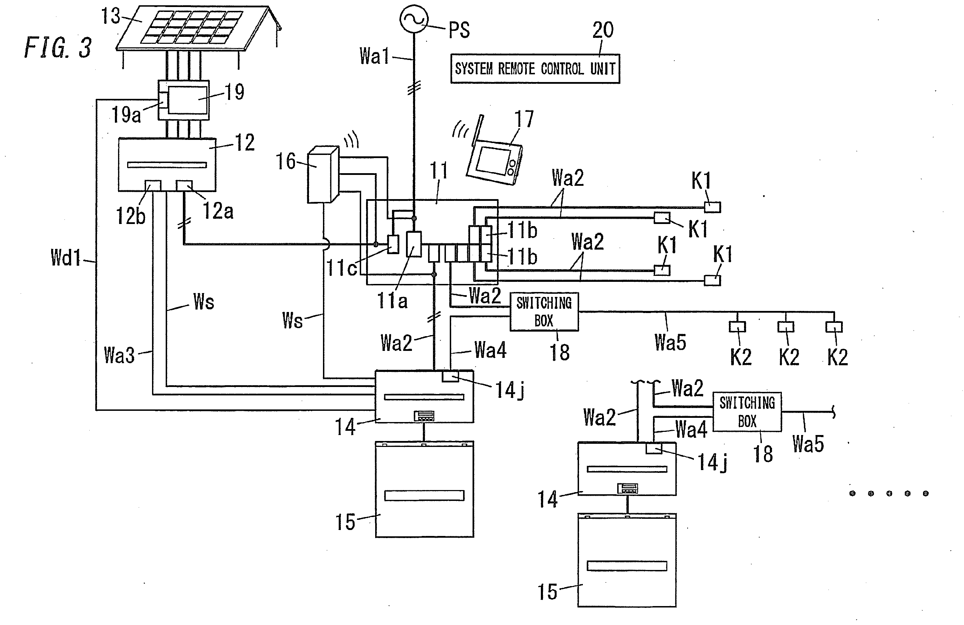

A power supply system according to the present embodiment has a configuration as shown in Fig. 3. In this system, DC power generated by a solar cell **13** is supplied from a grid independent outlet **19a** installed at a junction box **19** to a charge-discharge unit **14** via a DC electric line **Wd1**. The constituent elements similar to those of the First Embodiment are assigned with same reference numerals and the explanations thereof are omitted.

In the charge-discharge unit **14**, the DC power generated by the solar cell **13** is applied across a smoothing capacitor **C1**. Then in the charge- discharge unit **14**, the electric power generated by the solar cell **13** is converted into power to be charged into the storage cell unit **15**, or AC power supplied to appliances **K2** through a grid independent outlet **14j.** In this case, the efficiency is improved by a loss generated at a DC conversion part **14i**, compared with a case of the usage of the DC conversion part **14i.**

The charge-discharge unit **14** of the present embodiment has both configurations of AC power supply by a power conditioner **12** via an AC electric line **Wa3** and DC power supply by the solar cell **13** via the DC electric line **Wd1**. In this case, the system, based on the amount of the power by the solar cell **13** or the like, is configured to switch between a form of simultaneously utilizing the AC power supply and the DC power supply, and a form of utilizing only any one of the AC power supply and the DC power supply. The system may utilize only the DC power supply by the solar cell **13** via the DC electric line **Wd1.**

Power supply through the grid independent outlet **19a** of the junction box **19** can be performed upon parallel-off where AC output of the power conditioner **12** is not supplied to the side of the grid-connected board **11**, in the power failure state. The power supply through the grid independent outlet **19a** of the junction box **19** may be achieved by a configuration that the power becomes capable of being supplied automatically when the power failure occurs or by a configuration that the power becomes capable of being supplied by user manual operation during the power failure state.

In the charge-discharge unit **14**, a connection port that connects the AC electric line **Wa3** and the DC electric line **Wd1** may have a configuration of an outlet to which pins of a plug are connected or a configuration of a terminal block to which a terminal is connected.

### (Third Embodiment)

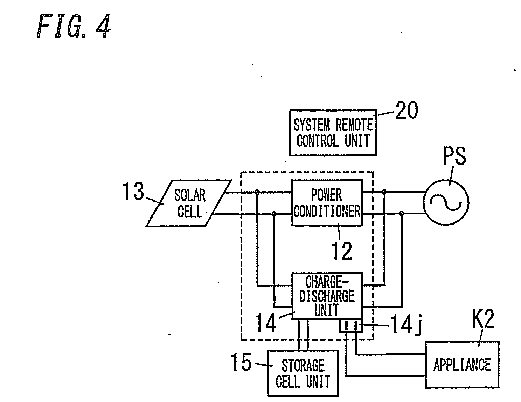

A power supply system according to the present embodiment has the same configuration as the First or Second Embodiment. Fig. 4 shows a schematic configuration of the power supply system. The constituent elements similar to those of the First or Second Embodiment are assigned with same reference numerals and the explanations thereof are omitted.

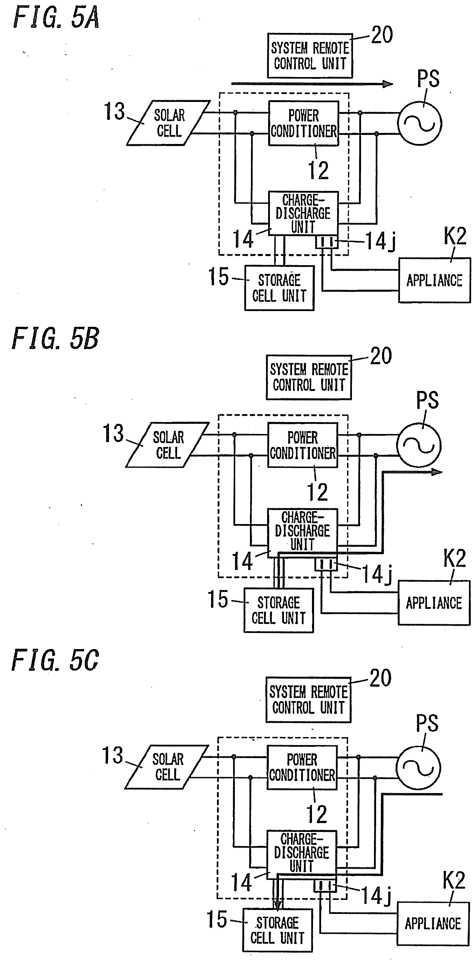

A system remote control unit **20** is configured to select any one of three operation modes shown in Figs. 5A to 5C, during the normal state, and to control power supply within the system in the selected operation mode.

In an operation mode shown in Fig. 5A, AC power supplied by a power conditioner **12** via a grid-connected board **11** reversely flows into a commercial power supply **PS**, during the normal state (while the power conditioner **12** performs the grid-connected operation). In an operation mode shown in Fig. 5B, AC power supplied to the side of a grid-connected board **11** by a charge-discharge unit **14** via a branch electric line **Wa2** reversely flows into the commercial power supply **PS**, during the normal state. In an operation mode shown in Fig. 5C, AC power supplied by the commercial power supply **PS** via the grid-connected board **11** is charged into a storage cell unit **15**, during the normal state. Among the operation modes, an operation mode comprehensively optimizing power efficiency, operation contents of appliances **K1** and **K2** and the like is selected based on various information, such as the amount of power by a solar cell **13**, a charge- discharge state of the storage cell unit **15**, the remaining capacity in the storage cell unit **15**, weather, operation patterns for the appliances **K1** and **K2**, system line state, and a supply schedule for power by the commercial power supply **PS.**

Although illustration of the appliances **K1** is omitted in Fig. 4, Figs. 5A to 5C and Figs. 6A to 6C described below, actually the appliances **K1** are connected to the grid-connected board **11** via branch electric lines **Wa2**. In Figs. 5A to 5C showing the above operation modes during the normal state, of course, power supply to the appliances **K1** is also performed. Excess power that has not been consumed as the operating power for the appliances **K1** reversely flows into the commercial power supply **PS.**

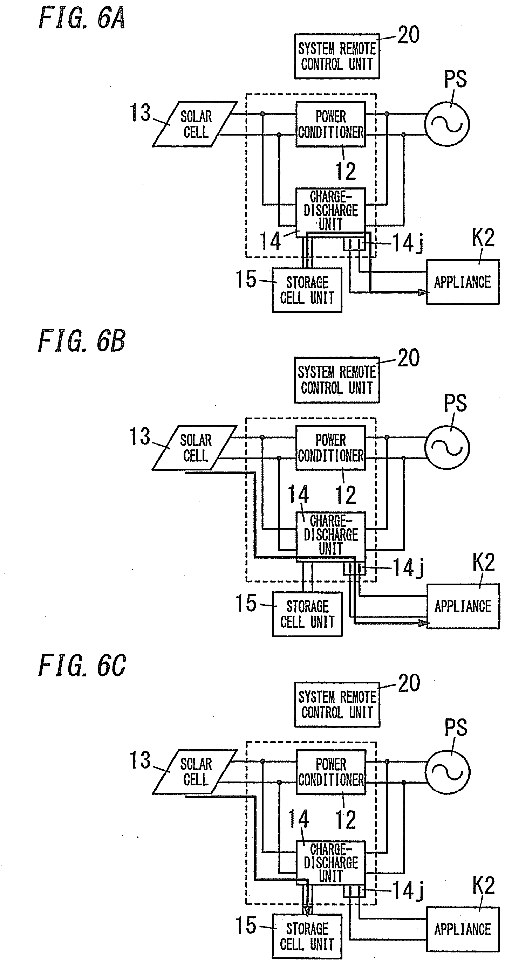

The system remote control unit **20** is configured to select any one of three operation modes (the first, second and fourth operation modes of the charge-discharge unit **14** explained in the First Embodiment) shown in Figs. 6A to 6C, during the power failure state (while the power conditioner **12** performs the grid independent operation) and to control power supply within the system in the selected operation mode. Here, the charge-discharge unit **14** shown in Figs. 6A to 6C receives DC power, through a DC electric line **Wd1**, from the solar cell **13** without via the power conditioner **12**, like the Second Embodiment. However, the charge-discharge unit **14** may receive AC power through a grid independent outlet **12b** of the power conditioner **12**, like the First Embodiment.

In an operation mode (the second operation mode) shown in Fig. 6A, AC power is supplied, using the charged power in the storage cell unit **15**, through a grid independent outlet **14j** of the charge-discharge unit **14** during the power failure state. In an operation mode (the fourth operation mode) shown in Fig. 6B, AC power is supplied, using the power generated by the solar cell **13**, through the grid independent outlet **14j** of the charge-discharge unit **14** during the power failure state. In an operation mode (the first operation mode) shown in Fig. 6C, the storage cell unit **15** is charged, using the power generated by the solar cell **13**, during the power failure state.

However, in the power failure state, determining whether or not to permit the use of the appliances **K2** depends on the amount of the power generated by the solar cell **13**, and therefore, it is impossible to ensure stable power supply. In order to resolve this problem, among the operation modes, an operation mode comprehensively optimizing power efficiency, operation contents of the appliances **K1** and **K2**, a time possible to supply power and the like is selected based on various information, such as the amount of the power by the solar cell **13**, a charge-discharge state of the storage cell unit **15**, the remaining capacity in the storage cell unit **15**, weather, the operation patterns for the appliances **K1** and **K2**, system line state, a supply schedule for power by the commercial power supply **PS**, and use schedules of the appliances **K2** by a user.

Further, the system remote control unit **20** is configured to make the power conditioner **12** start to perform the grid independent operation before the commercial power supply **PS** is in the power failure, based on the supply schedule for power by the commercial power supply **PS**, and accordingly, it is possible to continuously use at least the appliances **K2** regardless of presence or absence of the power failure.

Here, the supply schedule for power is information relevant to a date and time for a normal period during which power is supplied by the commercial power supply **PS**, and a date and time for a period of the power failure during which the supply of the power by the commercial power supply **PS** is stopped. The supply schedule for power is previously distributed from an electric power company to consumer houses, via network including Internet and the like.

The system remote control unit **20** makes the information monitoring terminal **17** display a period during which the grid independent operation is performed, based on the supply schedule for power by the commercial power supply **PS.** In a case of the configuration where the operation is switched to the grid independent operation by user manual operation, the system remote control unit **20** makes the information monitoring terminal **17** display time of day for starting the grid independent operation. Therefore, the user can grasp time of day when the operation is switched to the grid independent operation, or time of day when switching to the grid independent operation is required, and can perform preparation for the power failure.

When the commercial power supply **PS** is in the power failure, the storage cell unit **15** can be charged by the photovoltaic power generation. However, because power supplied by the power conditioner **12** depends on the amount of power by the solar cell **13**, it is impossible to ensure stable power supply. In order to resolve this problem, based on the above information, the system remote control unit **20** makes the information monitoring terminal **17** display a time possible to supply power to appliances **K2**, during the power failure state. Accordingly, it is possible to notify the user of a usable time of the appliances **K2** in the power failure state.

### (Fourth Embodiment)

A power supply system according to the present embodiment is different from that according to the First or Second Embodiment, in operations of a charge-discharge unit **14** during the power failure state (while a power conditioner **12** performs the grid independent operation). The constituent elements similar to those of the First or Second Embodiment are assigned with same reference numerals and the explanations thereof are omitted.

During the normal state (while the power conditioner **12** performs the grid-connected operation), operating power for appliances **K1** and **K2** and power to be charged into a storage cell unit **15** are supplied by a commercial power supply **PS** and the power conditioner **12** via a grid-connected board **11.**

Then, when the normal state is changed to the power failure state, the charge-discharge unit **14** first supplies AC power to the appliances **K2**, using the charged power in the storage cell unit **15.** When the remaining capacity in the storage cell unit **15** reduces to a predetermined value or less, the charge-discharge unit **14** supplies AC power to the appliances **K2**, using an output of a grid independent outlet **12b** of the power conditioner **12** performing the grid independent operation.

That is, immediately after the power failure, AC power is supplied to the appliances **K2**, using the charged power in the storage cell unit **15**, and then when the power failure is protracted, AC power is supplied to the appliances **K2**, using power generated by the photovoltaic power generation. Further in other word, immediately after the power failure, the charge- discharge unit **14** operates in the second operation mode, and then when the power failure is protracted, the charge-discharge unit **14** switches the second operation mode to the fourth operation mode and operates. Therefore, it is possible to control, by simple control algorithm, the power supply in the power failure.

Further, in each of the above-mentioned embodiments, the system may include an earthquake detection means configured to detect occurrence of an earthquake. The earthquake detection means includes a seismometer, an emergency earthquake warning receiver, and the like. When occurrence of an earthquake is not detected, the power conditioner **12** performs the grid-connected operation, and performs the same operations as the above- mentioned normal state. On the other hand, when occurrence of an earthquake is detected, the power conditioner **12** performs the grid independent operation, and operates the same operations as the above- mentioned power failure state. As a result, it is possible to store power through the grid independent outlet **12b** of the power conditioner **12**, and it is possible to improve the power supply capability even when it is difficult to supply power from the commercial power supply **PS** in connection with the occurrence of the earthquake.

### (Fifth Embodiment)

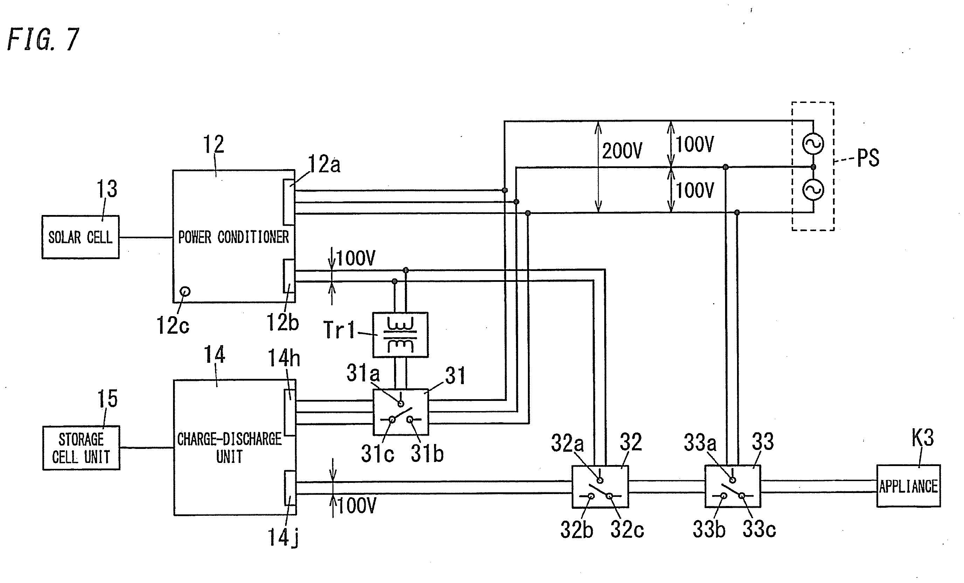

Fig. 7 shows a schematic configuration of a power supply system according to the present embodiment. The constituent elements similar to those of the First Embodiment are assigned with same reference numerals and the explanations thereof are omitted.

A commercial power supply **PS** of a 200V/100V, 3-wire single phase distribution system generates a voltage of 100V between one of voltage electrodes and a neutral electrode, and generates a voltage of 100V between the other of the voltage electrodes and the neutral electrode. Therefore, the commercial power supply **PS** generates a voltage of 200V between the pair of voltage electrodes.

A grid-connected output part **12a** of a power conditioner **12** is connected to a 200V/100V system of the commercial power supply **PS.** A grid independent outlet **12b** of the power conditioner **12** is connected to the primary side of a step-up transformer **Tr1**, and outputs AC 100V during the grid independent operation. AC increased to 200V is generated in the secondary side of the step-up transformer **Tr1.**

A normally-opened contact **31a** of a relay **31** is connected to the secondary side of the transformer **Tr1**. A normally-closed contact **31b** of the relay **31** is connected to the 200V/100V system of the commercial power supply **PS**. A common contact **31c** of the relay **31** is connected to a grid-connected terminal block **14h** of a charge-discharge unit **14.** In the relay **31**, a voltage is applied to the normally-opened contact **31a**, and thereby a coil (not shown) is excited. In a non-exciting state, the common contact **31c** is connected to the normally-closed contact **31b.** In an exciting state, the common contact **31c** is connected to the normally-opened contact **31a**.

A normally-opened contact **32a** of a relay **32** is connected to the grid independent outlet **12b** of the power conditioner **12.** A normally-closed contact **32b** of the relay **32** is connected to a grid independent outlet **14j** of the charge-discharge unit **14.** A common contact **32c** of the relay **32** is connected to a normally-closed contact **33b** of a relay **33.** In the relay **32**, a voltage is applied to the normally-opened contact **32a**, and thereby a coil (not shown) is excited. In a non-exciting state, the common contact **32c** is connected to the normally-closed contact **32b.** In an exciting state, the common contact **32c** is connected to the normally-opened contact **32a**.

A normally-opened contact **33a** of the relay **33** is connected to a 100V system of the commercial power supply **PS.** The normally-closed contact **33b** of the relay **33** is connected to the common contact **32c** of the relay **32.** A common contact **33c** of the relay **33** is connected to an appliance **K3.** In the relay **33**, a voltage is applied to the normally-opened contact **33a**, and thereby a coil (not shown) is excited. In a non-exciting state, the common contact **33c** is connected to the normally-closed contact **33b.** In an exciting state, the common contact **33c** is connected to the normally-opened contact **33a**.

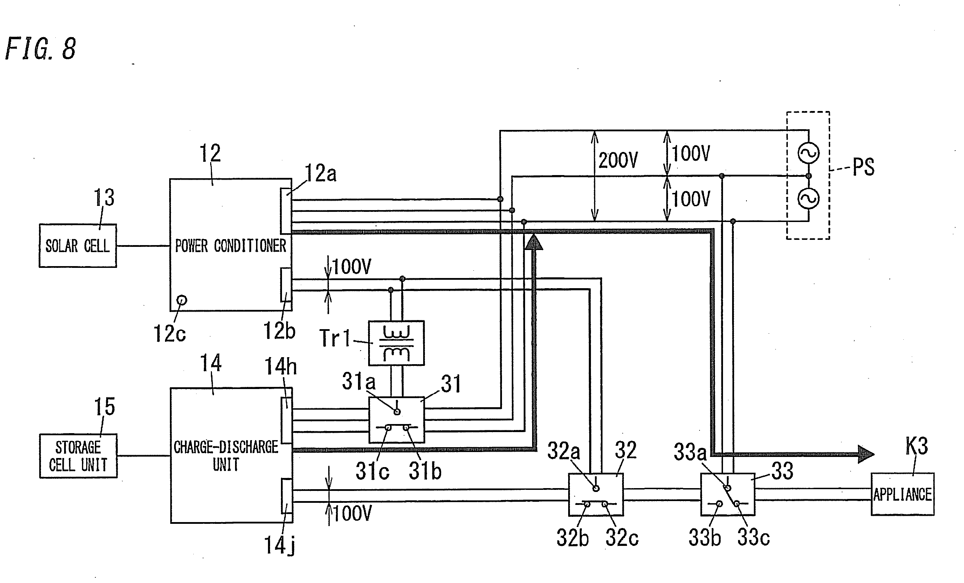

During the normal state (while the power conditioner **12** performs the grid-connected operation), the system operates in a supply mode shown in Fig. 8.

The power conditioner **12** during the grid-connected operation supplies AC 200V/100V to the 200V/100V system of the commercial power supply **PS** through the grid-connected output part **12a**, using power generated by a solar cell **13.** In the relay **33**, the coil is excited by a voltage of the 100V system of the commercial power supply **PS**, and then the common contact **33c** is connected to the normally-opened contact **33a**.

Further, the charge-discharge unit **14** in the normal state converts the charged power in a storage cell unit **15** into AC power of 200V/100V, and outputs the AC power through the grid-connected terminal block **14h.** At that time, the power supply through the grid independent outlet **12b** of the power conditioner **12** is stopped, and the relay **31** is in the non-exciting state, and the common contact **31c** is connected to the normally-closed contact **31b.** Therefore, AC power outputted through the grid-connected terminal block **14h** of the charge-discharge unit **14** is supplied to the 200V/100V system of the commercial power supply **PS.**

Thus, the AC powers outputted through the 100V system of the commercial power supply **PS**, the grid-connected output part **12a** of the power conditioner **12** and the grid-connected terminal block **14h** of the charge-discharge unit **14** are supplied to the appliance **K3** via the relay **33.**

Here, the power supply through the grid independent outlet **12b** of the power conditioner **12** is stopped, and the relay **32** is in the non-exciting state, and the common contact **32c** is connected to the normally-closed contact **32b.** However, in the relay **33**, the common contact **33c** is connected to the normally-opened contact **33a**, and accordingly, a voltage is not applied to the grid independent outlet **14j** of the charge-discharge unit **14.**

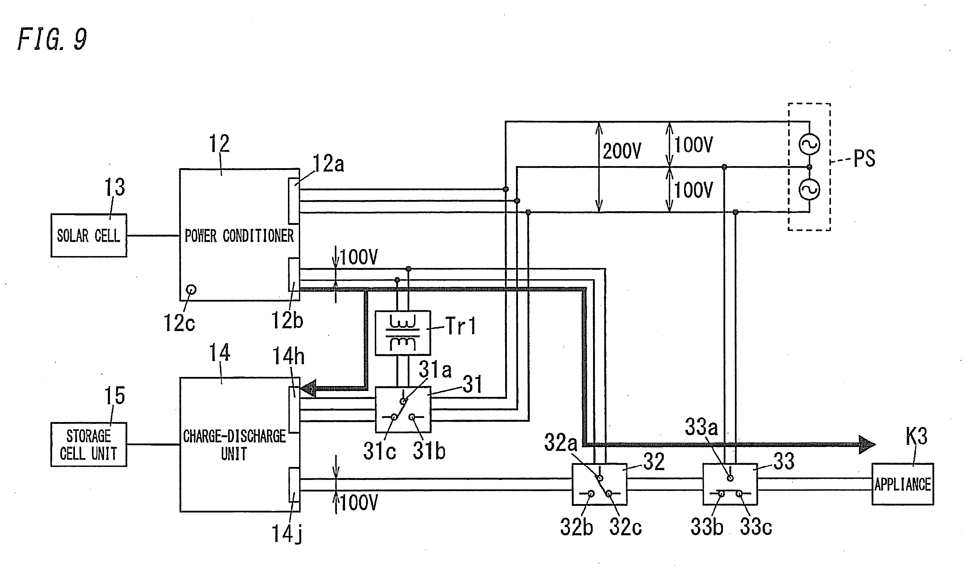

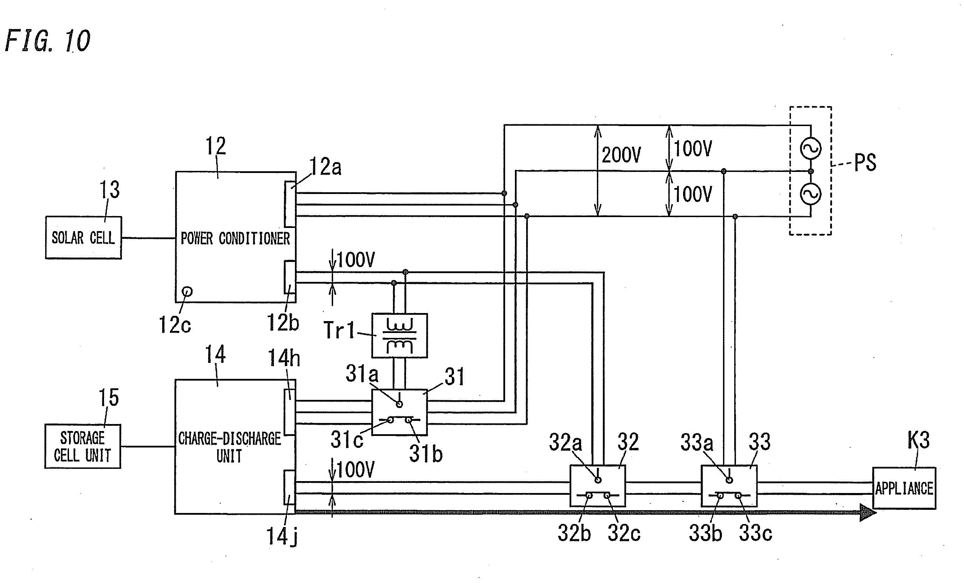

During the power failure state, operation of the power conditioner **12** is switched to the grid independent operation by the user operation to a grid independent operation button **12c** of the power conditioner **12.** Then, the power conditioner **12** operates in a first supply mode as shown in Fig. 9 or a second supply mode as shown in Fig. 10.

Fig. 9 shows the first supply mode in daytime during which the solar cell **13** can generate power. The power conditioner **12** during the grid independent operation outputs AC 100V through the grid independent outlet **12b**, using the power by the solar cell **13.** In the relay **31**, the coil is excited by a voltage outputted through the grid independent outlet **12b**, and the common contact **31c** is connected to the normally-opened contact **31a**. As a result, AC output through the grid independent outlet **12b** is supplied to the grid-connected terminal block **14h** of the charge-discharge unit **14**, and then the charge-discharge unit **14** charges the storage cell unit **15.**

Also in the relay **32**, the coil is excited by the voltage outputted through the grid independent outlet **12b**, and the common contact **32c** is connected to the normally-opened contact **32a**. The relay **33** is in the non-exciting state by the power failure in the commercial power supply **PS**, and the common contact **33c** is connected to the normally-closed contact **33b.** Therefore, AC output through the grid independent outlet **12b** of the power conditioner **12** is supplied to the appliance **K3** via the relays **32** and **33.**

Thus, when the power failure occurs in daytime during which the solar cell **13** can generate power, the storage cell unit **15** is charged and power is supplied to the appliance **K3**, using the power by the solar cell **13** (that is, the charge-discharge unit **14** performs both of the first and fourth operation modes described in the First Embodiment).

Fig. 10 shows the second supply mode in nighttime during which the solar cell **13** cannot generate power. The power conditioner **12** stops the AC output through the grid independent outlet **12b.** Therefore, the relay **31** is in the non-exciting state, and the common contact **31c** is connected to the normally-closed contact **31b.** However, the commercial power supply **PS** is in the power failure, and accordingly, a voltage is not applied to the grid-connected terminal block **14h** of the charge-discharge unit **14.** Also the relay **32** is in the non-exciting state, and the common contact **32c** is connected to the normally-closed contact **32b.** The relay **33** is in the non-exciting state by the power failure in the commercial power supply **PS**, and the common contact **33c** is connected to the normally-closed contact **33b.**

The charge-discharge unit **14** determines that nighttime during which the solar cell **13** cannot generate power has fallen, through a decrease in a voltage inputted to the grid-connected terminal block **14h**, and then outputs AC 100V through the grid independent outlet **14j**, using the charged power in the storage cell unit **15.** The AC output through the grid independent outlet **14j** is supplied to the appliance **K3** via the relays **32** and **33.** Here, the system remote control unit **20** shown in Fig. 1 may monitor power generated by the solar cell **13** and determine daytime or nighttime, based on the power measurement data in the power measurement unit **16**, and may control charging and discharging operations of the charge-discharge unit **14** based on the determined result.

Thus, when the power failure occurs in nighttime during which the solar cell **13** cannot generate power, power is supplied to the appliance **K3**, using the charged power in the storage cell unit **15** (that is, the charge-discharge unit **14** performs the second operation mode described in the First Embodiment).

In this way, when the power failure occurs, the power supply path is automatically switched by the relay **33.** Further, the operation of the power conditioner **12** is switched to the grid independent operation by the user operation to the grid independent operation button **12c** of the power conditioner **12.** Then, while the power conditioner **12** performs the grid independent operation, the power supply path is automatically switched by the relays **31** and **32**, according to daytime during which the solar cell **13** can generate power or nighttime during which the solar cell **13** cannot generate power.

Here, the grid independent operation button **12c** is equivalent to an operation unit in the invention, and is configured to switch between the grid-connected operation and the grid independent operation in the power conditioner **12** by user operation, during the power failure state.

The step-up transformer **Tr1** can be also omitted. The relay **31** may be configured to operate by an exciting voltage of 100V.

The power conditioner **12** may be configured so that the operation is automatically switched to the grid independent operation when detecting the power failure in the commercial power supply **PS.**

In each of the above-mentioned embodiments, the solar cell **13** is used as the distributed power source, however other distributed power source such as a fuel cell or a wind power generator may be used in place of the solar cell **13.**

Although the present invention has been described with reference to certain preferred embodiments, numerous modifications and variations can be made by those skilled in the art without departing from the true spirit and scope of this invention, namely claims.

## Claims

1. A power supply system, comprising:
a power conditioner (12) configured to convert DC power supplied by a distributed power source (13) into AC power and output the AC power;
a storage cell unit (15) configured to store electrical energy; and
a charge-discharge unit (14) configured to charge the storage cell unit (15), the charge-discharge unit (14) being configured to convert the charged power in the storage cell unit (15) into AC power and output the AC power,
**characterized in that**
the power conditioner (12) comprises a grid-connected output part (12a) that is an output used for a grid connected operation and a grid independent outlet (12b) that is an output used for a grid independent operation,
wherein the power conditioner (12) is configured to perform the grid-connected operation during a normal state in which AC power is supplied by a commercial power supply (PS),
wherein the power conditioner (12) is configured to perform the grid independent operation during a power failure state in which the supply of the AC power by the commercial power supply (PS) is stopped,
wherein the power conditioner (12) is configured to supply, to the charge-discharge unit (14), the AC power through the grid independent outlet (12b) in the grid independent operation, and
wherein the charge-discharge unit (14) comprises a DC conversion part (14i) that is configured to convert the AC power supplied by the power conditioner (12) through the grid independent outlet (12b) in the grid independent operation into DC power, the charge-discharge unit (14) being configured to charge the storage cell unit (15) by using the DC power outputted by the DC conversion part (14i), or to supply, to an appliance (K2), the AC power supplied by the power conditioner (12) through the grid independent outlet (12b) in the grid independent operation.

2. The power supply system according to claim 1,
wherein one of the power conditioner (12) and the charge-discharge unit (14) is configured to notify the other of the supply state of the AC power by the commercial power supply (PS).

3. The power supply system according to claim 1 or 2, further configured:
to operate, when the distributed power source (13) outputs DC power during the power failure state, in a first supply mode in which the power conditioner (12) supplies AC power to the appliance (K2) and the charge-discharge unit (14); and
to operate, when the distributed power source (13) does not output DC power during the power failure state, in a second supply mode in which the charge-discharge unit (14) converts the charged power in the storage cell unit (15) into AC power and supplies the AC power to the appliance (K2).

4. The power supply system according to claim 3, further comprising an operation unit configured to switch between the grid-connected operation and the grid independent operation in the power conditioner (12) during the power failure state by user operation,
wherein the power supply system is configured to switch between the first and second supply modes according to the output state of the DC power outputted by the distributed power source, when the power conditioner (12) performs the grid independent operation through operation to the operation unit.

5. The power supply system according to any one of claims 1 to 4,
wherein the power conditioner (12) is configured to start the grid independent operation, based on a supply schedule for the AC power by the commercial power supply (PS), before the normal state is changed to the power failure state.

6. The power supply system according to any one of claims 1 to 5, further comprising a notifying unit configured to notify of information relevant to a period during which the power conditioner (12) performs the grid independent operation based on a supply schedule for the AC power by the commercial power supply (PS).

7. The power supply system according to any one of claims 1 to 6,
wherein the power conditioner (12) is configured:
to perform, when no earthquake occurs, the grid-connected operation; and
to perform, when an earthquake has occurred, the grid independent operation.

8. The power supply system according to any one of claims 1 to 7,
wherein the charge-discharge unit (14) comprises an output part configured to supply, when the power conditioner (12) performs the grid independent operation, AC power to the appliance (K2).

9. The power supply system according to claim 8, further comprising a switching unit configured to switch the connection destination of the appliance (K2) to the output part or a main electric path.

10. The power supply system according to claim 9,
wherein the switching unit is configured to switch, when the power conditioner (12) performs the grid independent operation, the connection destination of the appliance (K2) to the output part.

11. The power supply system according to claim 9,
wherein the switching unit is configured to switch, by user operation, the connection destination of the appliance (K2) to the output part.

12. The power supply system according to any one of claims 8 to 11, further comprising an abnormality detection unit configured to detect abnormality in an electric path from the output part to the appliance (K2), when the output part supplies AC power upon the grid independent operation of the power conditioner (12),
wherein the charge-discharge unit (14) is configured to stop, when the abnormality detection unit has detected the abnormality, the supply of the AC power by the output part.

13. The power supply system according to any one of claims 8 to 12,
wherein the charge-discharge unit (14) comprises a grid independent output setting part configured to set whether or not the output part supplies AC power to the appliance (K2), when the power conditioner (12) performs the grid independent operation.

14. The power supply system according to any one of claims 1 to 13, further comprising a plurality of sets, each of which is configured by the charge-discharge unit (14) and the storage cell unit (15).

15. The power supply system according to claim 14,
wherein the power conditioner (12) is configured to distribute AC power supplied to charge-discharge units (14) of the plurality of sets, based on operation patterns for appliances (K2) to which the charge-discharge units (14) respectively supply AC power.

16. The power supply system according to any one of claims 1 to 15,
wherein the charge-discharge unit (14) is configured to operate, when the power conditioner (12) performs the grid independent operation, in one operation mode selected from among:
a first operation mode of charging the storage cell unit (15) with AC power supplied by the power conditioner (12);
a second operation mode of supplying, to the appliance (K2), AC power converted from the charged power in the storage cell unit (15); and
a third operation mode of converting the charged power in the storage cell unit (15) into AC power and then supplying the AC power to the appliance (K2), while charging the storage cell unit (15) with AC power supplied by the power conditioner (12).

17. The power supply system according to any one of claims 1 to 15,
wherein the charge-discharge unit (14) is configured to operate, when the power conditioner (12) performs the grid independent operation, in one operation mode selected from among:
a first operation mode of charging the storage cell unit (15) with AC power supplied by the power conditioner (12);
a second operation mode of supplying, to the appliance (K2), AC power converted from the charged power in the storage cell unit (15); and
a fourth operation mode of supplying, to the appliance (K2), AC power supplied by the power conditioner (12).

18. The power supply system according to any one of claims 8 to 13,
wherein when the power conditioner (12) performs the grid independent operation, the charge-discharge unit (14) is configured:
to convert the charged power in the storage cell unit (15) into AC power and then supply the AC power to the appliance (K2); and
to supply AC power supplied by the output part to the appliance (K2), after the remaining capacity in the storage cell unit (15) reduces to a predetermined value or less.

19. The power supply system according to any one of claims 1 to 18,
wherein when the power conditioner (12) performs the grid independent operation, the charge-discharge unit (14) is configured:
to charge the storage cell unit (15) with DC power supplied by the distributed power source; or
to convert DC power supplied by the distributed power source into AC power, and then supply the AC power to the appliance (K2).

## Patentansprüche

1. Stromversorgungssystem, das Folgendes umfasst:
einen Stromkonditionierer (12), der dazu konfiguriert ist, Gleichstrom, der von einer verteilten Stromquelle (13) zugeführt wird, in Wechselstrom umzuwandeln und den Wechselstrom auszugeben;
eine Speicherzelleneinheit (15), die dazu konfiguriert ist, elektrische Energie zu speichern; und
eine Ladungs-/Entladungseinheit (14), die dazu konfiguriert ist, die Speicherzelleneinheit (15) zu laden, wobei die Ladungs-/Entladungseinheit (14) dazu konfiguriert ist, die geladene Energie in der Speicherzelleneinheit (15) in Wechselstrom umzuwandeln und den Wechselstrom auszugeben,
**dadurch gekennzeichnet, dass**
der Stromkonditionierer (12) einen mit dem Stromnetz verbundenen Ausgabeteil (12a), der eine Ausgabe ist, die für einen mit dem Stromnetz verbundenen Betrieb verwendet wird, und einen vom Stromnetz unabhängigen Austritt (12b), der eine Ausgabe ist, die für einen vom Stromnetz unabhängigen Betrieb verwendet wird, umfasst,
wobei der Stromkonditionierer (12) dazu konfiguriert ist, den mit dem Stromnetz verbundenen Betrieb während eines Normalzustands durchzuführen, in dem Wechselstrom von einer kommerziellen Stromversorgung (PS) zugeführt wird,
wobei der Stromkonditionierer (12) dazu konfiguriert ist, den vom Stromnetz unabhängigen Betrieb während eines Stromausfallzustands durchzuführen, in dem die Zufuhr von Wechselstrom von der kommerziellen Stromversorgung (PS) gestoppt ist,
wobei der Stromkonditionierer (12) dazu konfiguriert ist, den Wechselstrom durch den vom Stromnetz unabhängigen Austritt (12b) in dem vom Stromnetz unabhängigen Betrieb der Ladungs-/Entladungseinheit (14) zuzuführen, und
wobei die Ladungs-/Entladungseinheit (14) einen Gleichstromumwandlungsteil (14i) umfasst, der dazu konfiguriert ist, den Wechselstrom, der von dem Stromkonditionierer (12) durch den vom Stromnetz unabhängigen Austritt (12b) in dem vom Stromnetz unabhängigen Betrieb zugeführt wurde, in Gleichstrom umzuwandeln, wobei die Ladungs-/Entladungseinheit (14) dazu konfiguriert ist, die Speicherzelleneinheit (15) durch Verwenden des Gleichstroms, der von dem Gleichstromumwandlungsteil (14i) ausgegeben wurde, zu laden oder den Wechselstrom, der von dem Stromkonditionierer (12) durch den vom Stromnetz unabhängigen Austritt (12b) in dem vom Stromnetz unabhängigen Betrieb zugeführt wurde, einem Gerät (K2) zuzuführen.

2. Stromversorgungssystem nach Anspruch 1,
wobei einer bzw. eine des Stromkonditionierers (12) und der Ladungs-/Entladungseinheit (14) dazu konfiguriert ist, den anderen über den Versorgungszustand des Wechselstroms durch die kommerzielle Stromversorgung (PS) zu benachrichtigen.

3. Stromversorgungssystem nach Anspruch 1 oder 2, das weiterhin zu Folgendem konfiguriert ist:
wenn die verteilte Stromquelle (13) Gleichstrom während des Stromausfallzustands ausgibt, in einem ersten Versorgungsmodus zu arbeiten, in dem der Stromkonditionierer (12) dem Gerät (K2) und der Ladungs-/Entladungseinheit (14) Wechselstrom zuführt; und
wenn die verteilte Stromquelle (13) keinen Gleichstrom während des Stromausfallzustands ausgibt, in einem zweiten Versorgungsmodus zu arbeiten, in dem die Ladungs-/Entladungseinheit (14) den geladenen Strom in der Speicherzelleneinheit (15) in Wechselstrom umwandelt und den Wechselstrom dem Gerät (K2) zuführt.

4. Stromversorgungssystem nach Anspruch 3, das weiterhin eine Betriebseinheit umfasst, die dazu konfiguriert ist, zwischen dem mit dem Stromnetz verbundenen Betrieb und dem vom Stromnetz unabhängigen Betrieb in dem Stromkonditionierer (12) während des Stromausfallzustands durch einen Bedienungsvorgang zu wechseln,
wobei das Stromversorgungssystem dazu konfiguriert ist, zwischen dem ersten und dem zweiten Versorgungsmodus gemäß dem Ausgabezustand des Gleichstroms, der von der verteilten Stromquelle ausgegeben wird, zu wechseln, wenn der Stromkonditionierer (12) den vom Stromnetz unabhängigen Betrieb durch einen Betrieb mit der Betriebseinheit durchführt.

5. Stromversorgungssystem nach einem der Ansprüche 1 bis 4,
wobei der Stromkonditionierer (12) dazu konfiguriert ist, den vom Stromnetz unabhängigen Betrieb auf der Basis eines Versorgungsplans für den Wechselstrom durch die kommerzielle Stromversorgung (PS) zu starten, bevor der Normalzustand in den Stromausfallzustand geändert wird.

6. Stromversorgungssystem nach einem der Ansprüche 1 bis 5, das weiterhin eine Benachrichtigungseinheit umfasst, die dazu konfiguriert ist, über Informationen, die für einen Zeitraum relevant sind, während dem der Stromkonditionierer (12) den vom Stromnetz unabhängigen Betrieb auf der Basis eines Versorgungsplans für den Wechselstrom durch die kommerzielle Stromversorgung (PS) durchführt, zu benachrichtigen.

7. Stromversorgungssystem nach einem der Ansprüche 1 bis 6,
wobei der Stromkonditionierer (12) zu Folgendem konfiguriert ist:
den mit dem Stromnetz verbundenen Betrieb durchzuführen, wenn sich kein Erdbeben ereignet; und
den vom Stromnetz unabhängigen Betrieb durchzuführen, wenn sich ein Erdbeben ereignet hat.

8. Stromversorgungssystem nach einem der Ansprüche 1 bis 7,
wobei die Ladungs-/Entladungseinheit (14) einen Ausgabeteil umfasst, der dazu konfiguriert ist, wenn der Stromkonditionierer (12) den vom Stromnetz unabhängigen Betrieb durchführt, dem Gerät (K2) Wechselstrom zuzuführen.

9. Stromversorgungssystem nach Anspruch 8, das weiterhin eine Schalteinheit umfasst, die dazu konfiguriert ist, das Verbindungsziel des Geräts (K2) zu dem Ausgabeteil oder einem Hauptstrompfad zu schalten.

10. Stromversorgungssystem nach Anspruch 9,
wobei die Schalteinheit dazu konfiguriert ist, das Verbindungsziel des Geräts (K2) zu dem Ausgabeteil zu schalten, wenn der Stromkonditionierer (12) den vom Stromnetz unabhängigen Betrieb durchführt.

11. Stromversorgungssystem nach Anspruch 9,
wobei die Schalteinheit dazu konfiguriert ist, das Verbindungsziel des Geräts (K2) durch einen Bedienungsvorgang zu dem Ausgabeteil zu schalten.

12. Stromversorgungssystem nach einem der Ansprüche 8 bis 11, das weiterhin eine Anomalienerkennungseinheit umfasst, die dazu konfiguriert ist, eine Anomalie in einem Strompfad von dem Ausgabeteil zu dem Gerät (K2) zu erkennen, wenn der Ausgabeteil Wechselstrom beim vom Stromnetz unabhängigen Betrieb des Stromkonditionierers (12) zuführt,
wobei die Ladungs-/Entladungseinheit (14) dazu konfiguriert ist, die Zufuhr des Wechselstroms zu dem Ausgabeteil zu stoppen, wenn die Anomalienerkennungseinheit die Anomalie erkannt hat.

13. Stromversorgungssystem nach einem der Ansprüche 8 bis 12,
wobei die Ladungs-/Entladungseinheit (14) einen Teil zum Einstellen einer vom Stromnetz unabhängigen Ausgabe umfasst, der dazu konfiguriert ist einzustellen, ob der Ausgabeteil dem Gerät (K2) zuführt oder nicht, wenn der Stromkonditionierer (12) den vom Stromnetz unabhängigen Betrieb durchführt.

14. Stromversorgungssystem nach einem der Ansprüche 1 bis 13, das weiterhin mehrere Sätze umfasst, die jeweils durch die Ladungs-/Entladungseinheit (14) und der Speicherzelleneinheit (15) konfiguriert werden.

15. Stromversorgungssystem nach Anspruch 14,
wobei der Stromkonditionierer (12) dazu konfiguriert ist, Wechselstrom, der Ladungs-/Entladungseinheiten (14) der mehreren Sätze zugeführt wird, auf der Basis von Betriebsmustern für Geräte (K2), denen die Ladungs-/Entladungseinheiten (14) jeweils Wechselstrom zuführen, zu verteilen.

16. Stromversorgungssystem nach einem der Ansprüche 1 bis 15,
wobei die Ladungs-/Entladungseinheit (14) dazu konfiguriert ist, wenn der Stromkonditionierer (12) den vom Stromnetz unabhängigen Betrieb durchführt, in einem Betriebsmodus zu arbeiten, der aus den folgenden ausgewählt ist:
einem ersten Betriebsmodus des Ladens der Speicherzelleneinheit (15) mit Wechselstrom, der von dem Stromkonditionierer (12) zugeführt wird;
einem zweiten Betriebsmodus des Zuführens von Wechselstrom, der aus dem geladenen Strom in der Speicherzelleneinheit (15) umgewandelt wird, zu dem Gerät (K2) und
einem dritten Betriebsmodus des Umwandelns des geladenen Stroms in der Speicherzelleneinheit (15) in Wechselstrom und dann des Zuführens des Wechselstroms zu dem Gerät (K2), während die Speicherzelleneinheit (15) mit Wechselstrom, der von dem Stromkonditionierer (12) zugeführt wird, geladen wird.

17. Stromversorgungssystem nach einem der Ansprüche 1 bis 15,
wobei die Ladungs-/Entladungseinheit (14) dazu konfiguriert ist, wenn der Stromkonditionierer (12) den vom Stromnetz unabhängigen Betrieb durchführt, in einem Betriebsmodus zu arbeiten, der aus den folgenden ausgewählt ist:
einem ersten Betriebsmodus des Ladens der Speicherzelleneinheit (15) mit Wechselstrom, der von dem Stromkonditionierer (12) zugeführt wird;
einem zweiten Betriebsmodus des Zuführens von Wechselstrom, der aus dem geladenen Strom in der Speicherzelleneinheit (15) umgewandelt wird, zu dem Gerät (K2) und
einem vierten Betriebsmodus des Zuführens von Wechselstrom, der von dem Stromkonditionierer (12) zugeführt wird, zu dem Gerät (K2).

18. Stromversorgungssystem nach einem der Ansprüche 8 bis 13,
wobei, wenn der Stromkonditionierer (12) den vom Stromnetz unabhängigen Betrieb durchführt, die Ladungs-/Entladungseinheit (14) zu Folgendem konfiguriert ist:
den geladenen Strom in der Speicherzelleneinheit (15) in Wechselstrom umzuwandeln und dann den Wechselstrom dem Gerät (K2) zuzuführen und
Wechselstrom, der von dem Ausgabeteil zugeführt wird, dem Gerät (K2) zuzuführen, nachdem die verbleibende Kapazität in der Speicherzelleneinheit (15) zu einem vorherbestimmten Wert oder weniger abgenommen hat.

19. Stromversorgungssystem nach einem der Ansprüche 1 bis 18,
wobei, wenn der Stromkonditionierer (12) den vom Stromnetz unabhängigen Betrieb durchführt, die Ladungs-/Entladungseinheit (14) zu Folgendem konfiguriert ist:
die Speicherzelleneinheit (15) mit Gleichstrom, der von der verteilten Stromquelle zugeführt wird, zu laden oder
Gleichstrom, der von der verteilten Stromquelle zugeführt wird, in Wechselstrom umzuwandeln und dann den Wechselstrom dem Gerät (K2) zuzuführen.

## Revendications

1. Système d'alimentation, comprenant :
un conditionneur de puissance (12) configuré pour convertir la puissance continue fournie par une source de puissance répartie (13) en une puissance alternative et délivrer la puissance alternative ;
une unité d'accumulateur (15) configurée pour stocker de l'énergie électrique ; et
une unité de charge-décharge (14) configurée pour charger l'unité d'accumulateur (15), l'unité de charge-décharge (14) étant configurée pour convertir la puissance chargée dans l'unité d'accumulateur (15) en une puissance alternative et délivrer la puissance alternative,
**caractérisé en ce que**
le conditionneur de puissance (12) comprend une partie de sortie connectée au réseau (12a) qui est une sortie utilisée pour un fonctionnement connecté au réseau et une sortie indépendante du réseau (12b) qui est une sortie utilisée pour un fonctionnement indépendant du réseau,
dans lequel le conditionneur de puissance (12) est configuré pour effectuer le fonctionnement connecté au réseau pendant un état normal dans lequel la puissance alternative est fournie par une alimentation commerciale (PS),
dans lequel le conditionneur de puissance (12) est configuré pour effectuer le fonctionnement indépendant du réseau pendant un état de panne d'alimentation dans lequel la fourniture de la puissance alternative par l'alimentation commerciale (PS) est arrêtée,
dans lequel le conditionneur de puissance (12) est configuré pour fournir, à l'unité de charge-décharge (14), la puissance alternative par l'intermédiaire de la sortie indépendante du réseau (12b) dans le fonctionnement indépendant du réseau, et
dans lequel l'unité de charge-décharge (14) comprend une partie de conversion en continu (14i) qui est configurée pour convertir la puissance alternative fournie par le conditionneur de puissance (12) par l'intermédiaire de la sortie indépendante du réseau (12b) dans le fonctionnement indépendant du réseau en une puissance continue, l'unité de charge-décharge (14) étant configurée pour charger l'unité d'accumulateur (15) en utilisant la puissance continue délivrée par la partie de conversion en continu (14i), ou pour fournir, à un appareil (K2), la puissance alternative fournie par le conditionneur de puissance (12) par l'intermédiaire de la sortie indépendante du réseau (12b) dans le fonctionnement indépendant du réseau.

2. Système d'alimentation selon la revendication 1,
dans lequel l'un du conditionneur de puissance (12) et de l'unité de charge-décharge (14) est configuré pour notifier à l'autre l'état de fourniture de la puissance alternative par l'alimentation commerciale (PS).

3. Système d'alimentation selon la revendication 1 ou 2, configuré en outre :
pour fonctionner, lorsque la source de puissance répartie (13) délivre une puissance continue pendant l'état de panne d'alimentation, dans un premier mode d'alimentation dans lequel le conditionneur de puissance (12) fournit une puissance alternative à l'appareil (K2) et à l'unité de charge-décharge (14) ; et pour fonctionner, lorsque la source de puissance répartie (13) ne délivre pas une puissance continue pendant l'état de panne d'alimentation, dans un deuxième mode d'alimentation dans lequel l'unité de charge-décharge (14) convertit la puissance chargée dans l'unité d'accumulateur (15) en une puissance alternative et fournit la puissance alternative à l'appareil (K2).

4. Système d'alimentation selon la revendication 3, comprenant en outre une unité d'opération configurée pour commuter entre le fonctionnement connecté au réseau et le fonctionnement indépendant du réseau dans le conditionneur de puissance (12) pendant l'état de panne d'alimentation par une opération d'utilisateur,
dans lequel le système d'alimentation est configuré pour commuter entre les premier et deuxième modes d'alimentation conformément à l'état de sortie de la puissance continue délivrée par la source de puissance répartie, lorsque le conditionneur de puissance (12) effectue le fonctionnement indépendant du réseau par l'opération dans l'unité d'opération.

5. Système d'alimentation selon l'une quelconque des revendications 1 à 4,
dans lequel le conditionneur de puissance (12) est configuré pour débuter le fonctionnement indépendant du réseau, sur la base d'un programme de fourniture de la puissance alternative par l'alimentation commerciale (PS), avant que l'état normal ne soit changé en l'état de panne d'alimentation.

6. Système d'alimentation selon l'une quelconque des revendications 1 à 5, comprenant en outre une unité de notification configurée pour notifier des informations relatives à une période pendant laquelle le conditionneur de puissance (12) effectue le fonctionnement indépendant du réseau sur la base d'un programme de fourniture de la puissance alternative par l'alimentation commerciale (PS).

7. Système d'alimentation selon l'une quelconque des revendications 1 à 6,
dans lequel le conditionneur de puissance (12) est configuré :
pour effectuer, lorsqu'aucun séisme ne se produit, le fonctionnement connecté au réseau ; et
pour effectuer, lorsqu'un séisme s'est produit, le fonctionnement indépendant du réseau.

8. Système d'alimentation selon l'une quelconque des revendications 1 à 7,
dans lequel l'unité de charge-décharge (14) comprend une partie de sortie configurée pour fournir, lorsque le conditionneur de puissance (12) effectue le fonctionnement indépendant du réseau, une puissance alternative à l'appareil (K2).

9. Système d'alimentation selon la revendication 8, comprenant en outre une unité de commutation configurée pour commuter la destination de connexion de l'appareil (K2) vers la partie de sortie ou vers un trajet électrique principal.

10. Système d'alimentation selon la revendication 9,
dans lequel l'unité de commutation est configurée pour commuter, lorsque le conditionneur de puissance (12) effectue le fonctionnement indépendant du réseau, la destination de connexion de l'appareil (K2) vers la partie de sortie.

11. Système d'alimentation selon la revendication 9,
dans lequel l'unité de commutation est configurée pour commuter, par l'opération d'utilisateur, la destination de connexion de l'appareil (K2) vers la partie de sortie.

12. Système d'alimentation selon l'une quelconque des revendications 8 à 11, comprenant en outre une unité de détection d'anomalie configurée pour détecter une anomalie dans un trajet électrique de la partie de sortie vers l'appareil (K2), lorsque la partie de sortie fournit une puissance alternative lors du fonctionnement indépendant du réseau du conditionneur de puissance (12),
dans lequel l'unité de charge-décharge (14) est configurée pour arrêter, lorsque l'unité de détection d'anomalie a détecté l'anomalie, la fourniture de la puissance alternative par la partie de sortie.

13. Système d'alimentation selon l'une quelconque des revendications 8 à 12,
dans lequel l'unité de charge-décharge (14) comprend une partie de détermination de sortie indépendante du réseau configurée pour déterminer si, oui ou non, la partie de sortie fournit une puissance alternative à l'appareil (K2), lorsque le conditionneur de puissance (12) effectue le fonctionnement indépendant du réseau.

14. Système d'alimentation selon l'une quelconque des revendications 1 à 13, comprenant en outre une pluralité d'ensembles, chacun d'eux étant configuré par l'unité de charge-décharge (14) et l'unité d'accumulateur (15).

15. Système d'alimentation selon la revendication 14,
dans lequel le conditionneur de puissance (12) est configuré pour distribuer la puissance alternative fournie aux unités de charge-décharge (14) de la pluralité d'ensembles, sur la base de motifs de fonctionnement pour les appareils (K2) auxquels les unités de charge-décharge (14) fournissent respectivement la puissance alternative.

16. Système d'alimentation selon l'une quelconque des revendications 1 à 15,
dans lequel l'unité de charge-décharge (14) est configurée pour fonctionner, lorsque le conditionneur de puissance (12) effectue le fonctionnement indépendant du réseau, dans un mode de fonctionnement sélectionné parmi :
un premier mode de fonctionnement pour charger l'unité d'accumulateur (15) avec la puissance alternative fournie par le conditionneur de puissance (12) ;
un deuxième mode de fonctionnement pour fournir, à l'appareil (K2), la puissance alternative convertie à partir de la puissance chargée dans l'unité d'accumulateur (15) ; et
un troisième mode de fonctionnement pour convertir la puissance chargée dans l'unité d'accumulateur (15) en une puissance alternative et ensuite fournir la puissance alternative à l'appareil (K2), tout en chargeant l'unité d'accumulateur (15) avec la puissance alternative fournie par le conditionneur de puissance (12).

17. Système d'alimentation selon l'une quelconque des revendications 1 à 15,
dans lequel l'unité de charge-décharge (14) est configurée pour fonctionner, lorsque le conditionneur de puissance (12) effectue le fonctionnement indépendant du réseau, dans un mode de fonctionnement sélectionné parmi :
un premier mode de fonctionnement pour charger l'unité d'accumulateur (15) avec la puissance alternative fournie par le conditionneur de puissance (12) ;
un deuxième mode de fonctionnement pour fournir, à l'appareil (K2), la puissance alternative convertie à partir de la puissance chargée dans l'unité d'accumulateur (15) ; et
un quatrième mode de fonctionnement pour fournir, à l'appareil (K2), la puissance alternative fournie par le conditionneur de puissance (12).

18. Système d'alimentation selon l'une quelconque des revendications 8 à 13,
dans lequel, lorsque le conditionneur de puissance (12) effectue le fonctionnement indépendant du réseau, l'unité de charge-décharge (14) est configurée :
pour convertir la puissance chargée dans l'unité d'accumulateur (15) en une puissance alternative et ensuite fournir la puissance alternative à l'appareil (K2) ; et
pour fournir la puissance alternative fournie par la partie de sortie à l'appareil (K2), après la réduction de la capacité restante dans l'unité d'accumulateur (15) à une valeur prédéterminée ou moins.

19. Système d'alimentation selon l'une quelconque des revendications 1 à 18,
dans lequel, lorsque le conditionneur de puissance (12) effectue le fonctionnement indépendant du réseau, l'unité de charge-décharge (14) est configurée :
pour charger l'unité d'accumulateur (15) avec la puissance continue fournie par la source de puissance répartie ; ou
pour convertir la puissance continue fournie par la source de puissance répartie en une puissance alternative ; et ensuite fournir la puissance alternative à l'appareil (K2).
